(19) Europäisches Patentamt
European Patent Office
Office européen des brevets

(11) EP 3 974 460 A1

(12) EUROPEAN PATENT APPLICATION

(43) Date of publication:
**30.03.2022 Bulletin 2022/13**

(21) Application number: **20198907.6**

(22) Date of filing: **29.09.2020**

(51) International Patent Classification (IPC):
***C08G 18/02*** *(2006.01)* ***C08G 18/67*** *(2006.01)*
***C08G 18/76*** *(2006.01)* ***C08G 18/79*** *(2006.01)*

(52) Cooperative Patent Classification (CPC):
**C08G 18/7664; C08G 18/022; C08G 18/672; C08G 18/794**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

# (54) A METHOD FOR STABLY STORING AN ISOCYANURATE COMPOSITION

(57) The invention relates to a method for stably storing an isocyanate composition, the obtained stably stored isocyanate composition, and a polyurethane resin prepared from the isocyanate composition.

Figure 1

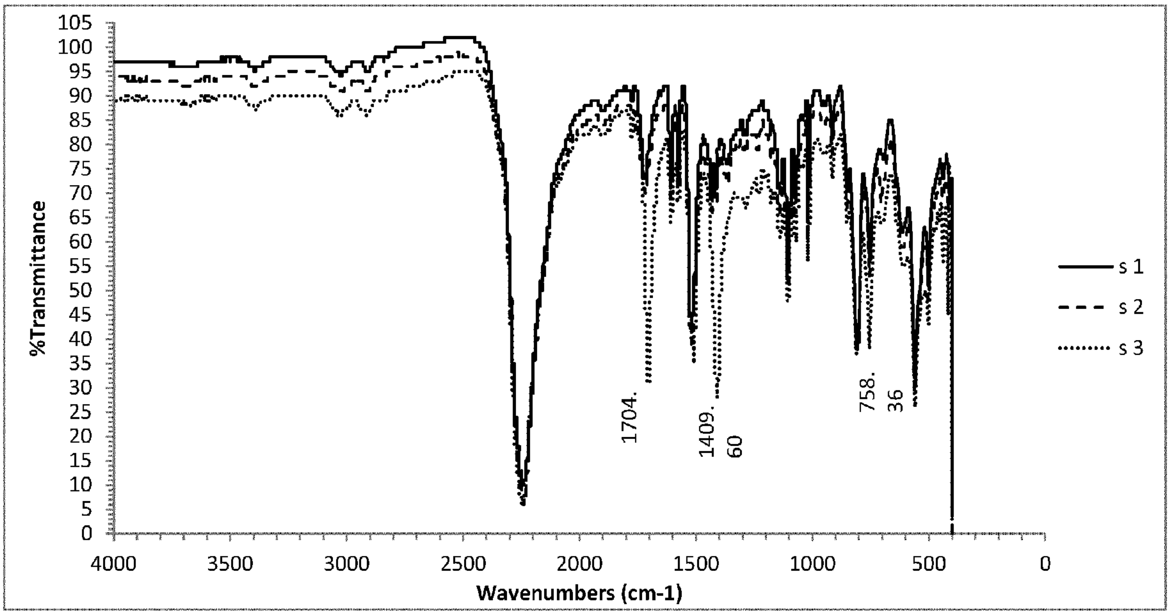


EP 3 974 460 A1

## Description

### Technical field

The invention relates to a method for stably storing an isocyanate composition, and the obtained stably stored isocyanate composition.

### Prior art

The catalyzed isocyanate trimerization is commonly used for curing and crosslinking in the application field of polyurethane materials. The rigid structure of isocyanurate six-membered ring generated by the trimerization can provide a high degree of crosslinking to enhance the mechanical strength of the cured polyurethane materials. At the same time, due to the high carbon, nitrogen and oxygen contents of the isocyanurate six-membered ring and the excellent flame retardancy produced by the conjugated aromatic structure, it may also help improve the overall flame retardancy of the polyurethane materials. For these reasons, the trimerization of isocyanate functional groups has been widely used in the field of polyurethane materials. Generally, the isocyanate trimerization needs to occur in the presence of a trimerization catalyst. We unexpectedly found that in the presence of a free radical initiator, isocyanate can undergo trimerization even without a trimerization catalyst, which means that the isocyanate composition containing a free radical initiator cannot be stably storage due to the trimerization. It is not yet known in the industry how to slow down or inhibit the trimerization of isocyanate containing a free radical initiator and how to make the isocyanate trimerization does not occur or occurs more controllable so that the corresponding isocyanate composition is storage-stable.

CN101675099A discloses a thermally activated free-radical initiator-containing polymer composition comprising (i) free radical initiator, (ii) free radical crosslinkable polymer, (iii) scorch inhibiting amount and/or cure-boosting amount of at least one of isocyanate, diisocyanate, e.g., MDI, or hydroxyalkyl (meth)acrylate compound, e.g., hydroxyethyl (meth)acrylate, and, optionally, (iv) other scorch retardants and/or cure boosters, e.g., a TEMPO compound, a hindered phenol, alpha-methyl styrene dimer, etc. The free radical initiator can be any thermally activated compound that is relatively unstable and easily breaks into at least two radicals, e.g., a peroxide or azo initiator. The crosslinkable polymer is a thermoplastic and/or elastomeric polymer that can be crosslinked (cured) through the action of a crosslinking agent, e.g., LDPE. The isocyanate, diisocyanate and (meth)acrylate scorch inhibitors and/or cure boosters can be used alone, or in combination with one another, or, optionally, in combination with a TEMPO compound, e.g., 4-hydroxy-TEMPO.

US5821296A discloses a polyurethane-polyester hybrid resin system, wherein the components of the system have improved shelf life stability. The resin system comprises an A-Side comprising a multifunctional isocyanate and a free radical initiator. The hybrid resin system also comprises a B-Side comprising a hydroxyl-terminated unsaturated polyester polyol, an ethylenically unsaturated monomer, a polyurethane catalyst, a polymerization inhibitor, and optionally a peroxide promoter, chain extender and filler. The B-Side polymerization inhibitor of the invention comprises substituted hindered phenol-type compounds with ring substituents producing activated benzylic hydrogens, nitrophenols with or without benzylic-type substituents, naphthoquinones, stabilized radical compounds, and mixtures thereof.

CN101974307B discloses a polyurethane acrylate adhesive containing ionic groups and a method for preparing the same. The adhesive comprises the following components in part by weight: 45 to 75 parts of macromolecular polyol, 1.5 to 3 parts of carboxylic acid compound or sulfonate salt, 15 to 30 parts of diisocyanate, 0.01 to 0.06 part of catalyst, 8 to 21 parts of monohydric alcohol containing acrylate group and 0.01 to 0.06 part of free radical polymerization inhibitor. The method comprises the following steps of: adding the carboxylic acid compound or the sulfonate salt into the macromolecular polyol; adding the diisocyanate and the catalyst into the mixture after dehydration; heating the mixture, then adding the monohydric alcohol containing acrylate group and the free radical polymerization inhibitor into the mixture; reacting the mixture at a controlled temperature to obtain a polyurethane acrylate polymer; and adding a mixture of diluent and initiator into the polymer to obtain the product. Compared with the prior art, the adhesive of the invention contains ionic groups and thus the adhesive has higher strength and toughness; and the multi-functionality macromolecular polyol also increases the mechanical strength of the adhesive.

Despite the above disclosures, a method for stably storing an isocyanurate composition is still urgently needed in the industry.

### Summary of the invention

One aspect of the present invention is to provide a method for stably storing an isocyanate composition comprising the following components:

A1) one or more polyisocyanates;
A2) at least one free radical initiator;

wherein component A3) at least one free radical inhibitor is added into the isocyanate composition.

Preferably, the isocyanate composition is used to prepare polyurethane resins.

Preferably, the polyisocyanate is selected from aromatic isocyanates, preferably diphenylmethane diisocyanate, toluene diisocyanate, diphenylmethane diisocyanate or combinations thereof, particularly preferably diphenylmethane diisocyanate or polyphenylene polymethylene polyisocyanate.

Preferably, the content of said A2) free radical initiator is 0.1 to 5 pbw, preferably 0.2 to 4 pbw, more preferably 0.4 to 3 pbw, based on the total weight of the isocyanate composition being 100 pbw.

Preferably, said A2) free radical initiator is selected from peroxides and/or azo compounds.

Preferably, the peroxide is selected from ketone peroxides, peroxycarbonates, acyl peroxides, peroxy esters, hydrogen peroxide, alkyl peroxides or any combination thereof.

Optionally, the azo compound is selected from azobisisobutyronitrile, azobisisoheptonitrile or any combination thereof.

Preferably, the content of said A3) free radical inhibitor is 0.001 to 2.0 pbw, preferably 0.002 to 1 pbw, more preferably 0.01 to 0.8 pbw, based on the total weight of the isocyanate composition being 100 pbw.

Preferably, said A3) free radical inhibitor is selected from phenols, amines and sulfur compounds containing hindered structures and/or conjugated structures, preferably phenols, amines and sulfur compounds containing hindered and/or conjugated structures which react with primary or chain free radicals to form non-radical substances or stable free radical substances that can no longer initiate monomer polymerization, more preferably hindered phenols, hindered amines and phenothiazines, particularly preferably hindered phenols.

Through repeated experiments, we unexpectedly found that isocyanates containing a free radical initiator are prone to trimerization to form (poly)isocyanurate, which means that free radical initiators catalyze the trimerization. Mixing the free radical initiators directly into the isocyanate has an adverse effect on the transportation and long-term storage of the isocyanate mixture. Especially in the case of high temperature and direct sunlight in summer, the internal temperature of a sealed ordinary transport vans can reach 50 to 60 °C, which will promote the premature occurrence of isocyanate trimerization and affect the quality of isocyanate products. In some long-distance shipping, ships will sail for several weeks near the tropical equator. Under such long-term high temperature conditions, it is more difficult to ensure the quality of isocyanate mixtures containing a free radical initiator. Even more surprisingly, we found that adding an appropriate amount of free radical inhibitor into the isocyanate mixture can effectively extend its storage time, and there is no need to worry about quality issues during transportation even in hot weather. The method of the present invention simply and effectively realizes the stable storage of isocyanate compositions, thereby simplifying the production process and improving the production efficiency of polyurethane resins, especially the polyurethane resins used for producing large-scale products such as turbine blades.

Another aspect of the present invention is to provide an isocyanate composition comprising the following components:

A1) one or more polyisocyanates;
A2) a free radical initiator; and
A3) at least one free radical inhibitor.

As mentioned above, we unexpectedly found after a lot of experiments that the isocyanate composition of the present invention can be stored stably, and can be transported and stored for a long time even in hot weather.

Another aspect of the present invention is to provide a method for preparing (poly)isocyanurate by reacting an isocyanate composition comprising the following components:

A1) one or more polyisocyanates;
A2) a free radical initiator; and
A3) at least one free radical inhibitor.

Another aspect of the present invention is to provide use of a free radical inhibitor in inhibiting the isocyanate trimerization catalyzed by a free radical initiator for preparing (poly)isocyanurates.

Preferably, the content of the free radical initiator is 0.1 to 5 pbw, preferably 0.2 to 4 pbw, more preferably 0.4 to 3 pbw, based on the total weight of the reaction system.

Preferably, the content of the free radical inhibitor is 0.001 to 2.0 pbw, preferably 0.002 to 1 pbw, more preferably 0.01 to 0.8 pbw, based on the total weight of the isocyanate composition being 100 pbw.

Another aspect of the present invention is to provide a method for preparing a polyurethane resin, wherein the polyurethane resin is prepared by reacting a polyurethane reaction system comprising the following components:

component A) comprising:

A1) one or more polyisocyanates;
A2) a free radical initiator;
A3) at least one free radical inhibitor;

component B) comprising:

B1) one or more organic polyols, the content of the organic polyol being 21 to 60 wt.%, based on the total weight of the polyurethane composition being 100 wt.%;
B2) one or more compounds with the structure of formula (I)

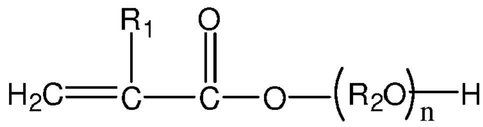

I ,

wherein $R_1$ is selected from hydrogen, methyl or ethyl; $R_2$ is selected from alkylene groups having 2 to 6 carbon atoms, propylene-2,2-di(4-phenylene), 1,4-xylylene, 1,3-xylylene, 1,2-xylylene; n is an integer selected from 1 to 6.

Preferably, said component B1) is selected from one or more polyether polyols.
Preferably, said component B2) is selected from hydroxyethyl methacrylate, hydroxypropyl methacrylate, hydroxybutyl methacrylate, hydroxyethyl acrylate, hydroxypropyl acrylate, hydroxybutyl acrylate or combinations thereof.
Preferably, the organic polyol has a functionality of 1.7 to 6, preferably 1.9 to 4, more preferably 1.9 to 2.8, and a hydroxyl value of 150 to 1100 mg KOH/g.
Another aspect of the present invention is to provide a polyurethane resin prepared by the method for preparing a polyurethane resin according to the present invention.
Another aspect of the present invention is to provide a polyurethane product comprising said polyurethane resin according to the present invention.
Preferably, the polyurethane product is selected from cable bridges, frames for door and window curtain walls, ladder frames, tent poles or pipes, anti-glare panels, floors, sucker rods, wire poles and cross arms, guardrails, grilles, construction profiles, container profiles and plates, bicycle frames, fishing rods, cable cores, core rods for insulators, radomes, single-layer or sandwich continuous plates, and shells, webs, spar caps, auxiliary beams and blade roots for turbine blades.

**Description of the drawing**

The present invention will be exemplified below in conjunction with the drawing.
Fig. 1 shows the infrared spectra of the example of the present invention and the comparative example. The curve s1 in Fig. 1 represents the spectrum of a system with only isocyanate 44V20; the curve s2 in Fig. 1 shows that after adding 2 pbw of TBPB into isocyanate 44V20, the viscosity has no change in the initial stage; the curve s3 in Fig. 1 shows the spectrum after 56 days after adding 2 pbw of TBPB into isocyanate 44V20.

**Embodiments**

The following terms used in the present invention have the following definitions or explanations.
Pbw refers to the mass parts of each component of the reaction system.
Functionality refers to the value measured according to the formula in the industry: functionality = hydroxyl value * molecular weight / 56100; wherein the molecular weight is determined by GPC high performance liquid chromatography.
The isocyanate index refers to the value calculated by the following formula:

$$\text{Isocyanate index}(\%) = \frac{\text{The moles of isocyanate groups (NCO groups) in component A}}{\text{The moles of isocyanate-reactive groups in component B}} \times 100\%$$

The hydroxyl value (OH number) indicates the amount of potassium hydroxide in milligrams which is equivalent to the amount of acetic acid bound by one gram of substance during acetylation. In the context of the present invention the hydroxyl value is determined according to the standard DIN 53240-1 (June 2013).

Any organic polyisocyanate can be used in the aforementioned method of the present invention, including aromatic, aliphatic and cycloaliphatic polyisocyanates and combinations thereof. The polyisocyanate can be represented by the general formula $R(NCO)_n$, wherein R represents an aliphatic hydrocarbyl group containing 2 to 18 carbon atoms, an aromatic hydrocarbyl group containing 6 to 15 carbon atoms, and an araliphatic hydrocarbyl group containing 8 to 15 carbon atoms, and n = 2 to 4.

Usable polyisocyanates include, preferably but are not limited to, vinyl diisocyanate, tetramethylene 1,4-diisocyanate, hexamethylene diisocyanate (HDI), dodecane-1,2-diisocyanate, cyclobutane-1,3-diisocyanate, cyclohexane-1,3-diisocyanate, cyclohexane-1,4-diisocyanate, 1-isocyanate-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydrogenated diphenylmethane-2,4-diisocyanate, perhydrogenated diphenylmethane 4,4-diisocyanate, phenylene 1,3-diisocyanate, phenylene 1,4-diisocyanate, stilbene 1,4-diisocyanate, 3,3-dimethyl-4,4-diphenyl diisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), mixtures of diphenylmethane diisocyanates and/or diphenylmethane diisocyanate homologs containing more nuclei, polyphenylene polymethylene polyisocyanate (polymeric MDI), naphthylene-1,5-diisocyanates (NDI), their isomers, any mixture of them and their isomers.

Usable polyisocyanates also include isocyanates modified with carbodiimide, allophanate, etc., preferably, but not limited to, diphenylmethane diisocyanate, carbodiimide-modified diphenylmethane diisocyanate, their isomers, mixtures of them and their isomers.

When used in the present invention, polyisocyanates include isocyanate dimers, trimers, tetramers, or combinations thereof.

In certain embodiments of the present invention, the isocyanate is selected from aromatic isocyanates, preferably diphenylmethane diisocyanate, toluene diisocyanate, diphenylmethane diisocyanate or combinations thereof, particularly preferably diphenylmethane diisocyanate or polyphenylene polymethylene polyisocyanate.

In a preferable embodiment of the present invention, the polyisocyanate component is selected from polyMDI.

The NCO content of the organic polyisocyanate of the present invention is 20 to 33 wt.%, preferably 25 to 32 wt.%, particularly preferably 30 to 32 wt.%. The NCO content is measured according to GB/T 12009.4-2016.

The organic polyisocyanate can also be used in the form of a polyisocyanate prepolymer. These polyisocyanate prepolymers can be obtained by reacting an excess of the aforementioned organic polyisocyanate with a compound having at least two isocyanate-reactive groups at a temperature of, for example, 30 to 100°C, preferably about 80°C. The NCO content of the polyisocyanate prepolymer of the present invention is 20 to 33 wt.%, preferably 25 to 32 wt.%. The NCO content is measured according to GB/T 12009.4-2016.

Free radical initiator refers to a reagent capable of generating free radicals in a free radical reaction. It can also be called a radical initiator. The process of generating free radicals is called chain initiation. The free radical initiators that can be used in the present invention include but are not limited to peroxide initiators, azo initiators, and redox initiators. Peroxide initiators are further divided into organic peroxide initiators and inorganic peroxide initiators.

The general structural formula of the organic peroxide is R-O-O-H or R-O-O-R, wherein R is an alkyl group, an acyl group, a carbonate group, etc. It further includes: acyl peroxides, such as benzoyl peroxide, lauroyl peroxide; hydroperoxides, such as cumene hydroperoxide, tert-butyl hydroperoxide; dialkyl peroxides, such as di-tert-butyl peroxide, dicumyl peroxide; ester peroxides, tert-butyl peroxybenzoate, tert-butyl peroxypivalate; ketone peroxides, such as methyl ethyl ketone peroxide, cyclohexanone peroxide; dicarbonate peroxides, such as diisopropyl peroxydicarbonate, dicyclohexyl peroxydicarbonate. Generally, the order of activity of the organic peroxides is dicarbonate peroxides > acyl peroxides > ester peroxides > dialkyl peroxides > hydroperoxides.

Azo initiators include azobisisobutyronitrile and azobisisoheptonitrile, which are low-activity initiators. Azobisisobutyronitrile is commonly used, has the application temperature range of 50 to 65 °C and shows uniform decomposition, forms only one kind of free radical, and has no other side reactions. It is relatively stable and can be stored safely in the pure state, but it also decomposes rapidly at 80 to 90 °C. The disadvantage is that the decomposition rate is low, and the formed isobutyronitrile radical has insufficient dehydrogenation ability, so that it cannot be used as an initiator for graft polymerization.

Generally, azobisisoheptonitrile has higher activity and high initiation efficiency, and can replace azobisisobutyronitrile. Dimethyl azobisisobutyrate (AIBME) has moderate initiation activity, so that the polymerization reaction is easy to control, and has no residue in the polymerization process, has high product conversion rate and harmless decomposition products. Thus, it is the best alternative for azobisisobutyronitrile (AIBN). The relatively high decomposition temperature of peroxide initiators and azo initiators (50-100 °C) limits their application in low-temperature polymerization reactions.

Free radical inhibitors that can be used in the present invention include phenols, amines and sulfur compounds

containing hindered structures and/or conjugated structures, preferably phenols, amines and sulfur compounds containing hindered and/or conjugated structures which react with primary or chain free radicals to form non-radical substances or stable free radical substances that can no longer initiate monomer polymerization, more preferably hindered phenols, hindered amines and phenothiazines, particularly preferably hindered phenols. Specifically, it includes phenols, amines or sulfur compounds containing hindered structures and/or conjugated structures. Preferable are phenols, amines and sulfur compounds containing hindered structures and/or conjugated structures which react with primary or chain free radicals to form non-radical substances or stable free radical substances that can no longer initiate monomer polymerization. The hindered phenols refer to phenolic compounds with a sterically hindered structure, such as 2,8-di-tert-butyl-4-methylphenol, tert-butyl hydroquinone, dibutyl hydroxytoluene (also known as 2,6-di-tert-butyl p-cresol, for short BHT).

The hindered amines refer to a class of sterically hindered organic amine compounds. The usable hindered amines include piperidine derivatives, imidazolone derivatives and azacycloalkanone derivatives, such as two categories, 2,2,6,6-tetramethylpiperidine derivatives and 1,2,2,6,6-pentamethylpiperidine derivatives. Specifically, it includes (2,2,6,6-tetramethyl-4-hydroxypiperidinyl)benzoate, bis(2,2,6,6-tetramethyl-4-hydroxypiperidinyl)sebate, nitrilotri[(2,2,6,6-tetramethyl-4-hydroxypiperidinyl)acetate] and N,N'-bis(2,2,6,6-tetramethylpiperidinyl) hexanediamine, tris(1,2,2,6,6-pentamethyl-4-hydroxypiperidinyl)phosphite, bis(1,2,2,6,6-pentamethyl-4-hydroxypiperidinyl)sebate and bis(1,2,2,6,6-pentamethyl-4-hydroxypiperidinyl) 2-ethyl-2-(4-hydroxy-3,5-di-tert-butylbenzyl)malonate, etc.

Free radical reaction inhibitors that can be used in the present invention also include polymerization inhibitors and retarders, such as p-methoxyphenol, benzoquinone, polymethylpyridine derivatives, and low-valent copper ions.

The polyol of the present invention may be polyether polyol, polyester polyol, polycarbonate polyol and/or mixtures thereof. One or more polyether polyols are preferable, wherein at least one polyether polyol is an amine-started polyol. The polyether polyol has a functionality of 2 to 8, preferably 3 to 6, and a hydroxyl value of 50 to 1200, preferably 200 to 800.

Examples of polyether polyols that can be used in the present invention are aromatic amine-started polyether polyols, preferably diphenylmethane diamine-started polyether polyols based on propylene oxide.

Parts of the polyether polyols usable in the present invention are selected from sucrose/sorbitol-started polyether polyols. More preferably, parts of the polyether polyols are selected from sucrose/sorbitol-started polyether polyols based on propylene oxide.

The polyester polyol is prepared by reacting a dicarboxylic acid or a dicarboxylic acid anhydride with a polyol. The dicarboxylic acid is preferably but not limited to aliphatic carboxylic acids containing 2 to 12 carbon atoms, such as succinic acid, malonic acid, glutaric acid, adipic acid, suberic acid, azelaic acid, sebacic acid, dodecanedioic acid, maleic acid, fumaric acid, phthalic acid, isophthalic acid, terephthalic acid, and mixtures thereof. The dicarboxylic acid anhydride is preferably, but not limited to, phthalic anhydride, tetrachlorophthalic anhydride, maleic anhydride, and mixtures thereof. The polyol is preferably, but not limited to, ethylene glycol, diethylene glycol, 1,2-propylene glycol, 1,3-propylene glycol, dipropylene glycol, 1,3-methylpropylene glycol, 1,4-butanediol, 1,5-pentanediol, 1,6-hexanediol, neopentyl glycol, 1,10-decanediol, glycerol, trimethylolpropane or mixtures thereof. The polyester polyol also includes a polyester polyol prepared from lactones. The polyester polyol prepared from lactone is preferably, but not limited to, a polyester polyol prepared from ε-caprolactone.

The polycarbonate polyol is preferably, but not limited to, polycarbonate diol. The polycarbonate diol can be prepared by reacting a diol with dihydrocarbyl or diaryl carbonate or phosgene. The diol is preferably, but not limited to, 1,2-propylene glycol, 1,3-propylene glycol, 1,4-butanediol, 1,5-pentanediol, 1,6-hexanediol, diethylene glycol, trioxymethylene diol or mixtures thereof. The dihydrocarbyl or diaryl carbonate is preferably, but not limited to, diphenyl carbonate.

Optionally, the polyurethane composition of the present invention further comprises B2) one or more compounds with the structure of formula (I)

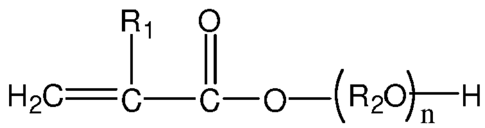

I ,

wherein $R_1$ is selected from hydrogen, methyl or ethyl; $R_2$ is selected from alkylene groups having 2 to 6 carbon atoms; n is an integer selected from 1 to 6.

In a preferable embodiment of the present invention, $R_2$ is selected from ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene,

2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, propylene-2,2-di(4-phenylene), 1,4-xylylene, 1,3-xylylene, 1,2-xylylene.

Preferably, said B1) is selected from organic polyols having a functionality of 1.7 to 6, preferably 1.9 to 4.5, and a hydroxyl value of 150 to 1100 mg KOH/g, preferably 150 to 550 mg KOH/g .

In a preferable embodiment of the present invention, said component B2) is selected from hydroxyethyl methacrylate, hydroxypropyl methacrylate, hydroxybutyl methacrylate, hydroxyethyl acrylate, hydroxypropyl acrylate, hydroxybutyl acrylate or combinations thereof.

The compound of formula (I) can be prepared by methods commonly used in the art, for example, can be prepared by esterification reaction of (meth)acrylic anhydride, (meth)acrylic acid or (meth)acrylic acid halide with $HO-(R_2O)_nH$. Those skilled in the art are familiar with the preparation methods, such as those in "Handbook of Polyurethane Raw Materials and Auxiliaries" (Liu Yijun, published on April 1, 2005), Chapter 3, and in "Polyurethane Elastomer" (Liu Houjun, published in August 2012), Chapter 2, the entire contents of which are incorporated herein by reference.

In the method for preparing a polyurethane resin of the present invention, in the addition polymerization of isocyanate groups and hydroxyl groups, the isocyanate groups may be those contained in the organic polyisocyanate (component A), or may also be those contained in the intermediate product of the reaction between the organic polyisocyanate (component A) and the organic polyol (component B1)) or the component B2). The hydroxyl groups may be those contained in the organic polyol (component B1)) or the component B2), or may also be those contained in the intermediate product of the reaction between the organic polyisocyanate (component A) and the organic polyol (component B1)) or the component B2).

The free radical polymerization of the present invention is an addition polymerization of olefinic bonds, wherein the olefinic bonds may be those contained in the component B2), or may also be those contained in the intermediate product of the reaction between the component B2) and the organic polyisocyanate.

In the method for preparing a polyurethane resin of the present invention, the polyurethane addition polymerization (that is, the addition polymerization of the isocyanate groups and the hydroxyl groups) and the free radical polymerization proceed simultaneously. It is well known by those skilled in the art that suitable reaction conditions can be selected so that the polyurethane addition polymerization and the free radical polymerization proceed successively. However, the polyurethane matrix prepared in this way has a different structure from that of the polyurethane matrix prepared under the condition that the polyurethane addition polymerization and the free radical polymerization proceed simultaneously. Thus, the polyurethane composites prepared from the resin matrices have different mechanical properties and manufacturability.

Optionally, the aforementioned polyurethane compositions may also contain auxiliary agents or additives, including but not limited to, fillers, internal mold release agents, flame retardants, smoke inhibitors, dyes, pigments, antistatic agents, antioxidants, UV stabilizers agents, diluents, defoamers, coupling agents, surface wetting agents, leveling agents, water scavengers, catalysts, molecular sieves, thixotropic agents, plasticizers, foaming agents, foam stabilizers, foam stabilizing agents, free radical reaction inhibitors or combinations thereof. These components may optionally be contained in the isocyanate component A) and/or the isocyanate-reactive component B) of the present invention. These components may also be independently stored as another component, and are firstly mixed with the isocyanate component A) and/or the component B) of the present invention and then used to prepare a polyurethane composite.

In some embodiments of the present invention, the filler is selected from aluminum hydroxide, bentonite, coal ash, wollastonite, perlite powder, floating bead, calcium carbonate, talc powder, mica powder, porcelain clay, fumed silica, expandable microsphere, diatomaceous earth, volcanic ash, barium sulfate, calcium sulfate, glass microsphere, stone powder, wood powder, wood chip, bamboo powder, bamboo chip, rice grain, straw chip, sorghum chip, graphite powder, metal powder, recycled powder of thermosetting composites, plastic particle or powder, or combinations thereof. The glass microsphere can be solid or hollow.

The internal mold release agent that can be used in the present invention includes any conventional mold release agent used in the production of polyurethanes. Examples thereof include long-chain carboxylic acids, especially fatty acids, such as stearic acid, and amines of long-chain carboxylic acids, such as stearamide, fatty acid esters, and metal salts of long-chain carboxylic acids, such as zinc stearate, or polysiloxanes.

Examples of flame retardants that can be used in the present invention include triaryl phosphates, trialkyl phosphates, halogen-bearing triaryl phosphates or trialkyl phosphates, melamine, melamine resins, halogenated paraffin, red phosphorus or combinations thereof.

Other additives that can be used in the present invention include water scavengers, such as molecular sieves; defoamers, such as polydimethylsiloxane; coupling agents, such as monoethylene oxide or organic amine-functionalized trialkoxysilanes or combinations thereof. The coupling agents are particularly preferably used to improve the adhesion between the resin matrix and the fiber reinforced material. Fine-particle fillers, such as clay and fumed silica, are often used as thixotropic agents.

After repeated experiments, we unexpectedly found that the method of the present invention can provide a stably stored isocyanate composition, thereby not only resulting in a polyurethane resin with excellent quality, but also simplifying the production process and improving the production efficiency.

## Examples

Source of raw materials:

Isocyanate 44V20: NCO%: 30.5 to 32.5%, viscosity: 160 to 240mP.s@25°C, purchased from Covestro Polymers (China) Co., Ltd.;
Tert-butyl peroxybenzoate (TBPB): purchased from Akzo Nobel;
Tert-butyl hydroquinone and dibutyl hydroxytoluene (BHT): both purchased from Sigma-Aldrich; GTS-THP gel time tester: purchased from Shanghai Senlan Scientific Instrument Co., Ltd.

The test methods in the Examples are described as follows:

NCO content refers to the content of NCO groups in the system, measured according to GB/T 12009.4-2016.
Gel time refers to a period from a time point when the components of the reaction system are mixed to a time point when the viscosity reaches a certain value (for example: about 10000 mPa.s). The gel time of the present invention is the time tested using a gel tester. During the test, the components of the reaction system are uniformly mixed and then placed in the gel tester, and the time period from a time point when the start button is pressed to a time point when the gel tester stops working is recorded as the gel time of the present invention.
Viscosity test: Test according to GB/T 12008.8-1992.

Comparative Example 1

100 parts by weight (pbw) of liquid isocyanate raw material 44V20 and then 2 parts by weight of TBPB were added into a plastic cup. The mixture was uniformly stirred quickly, and then placed into an oven at 50 °C. The viscosity change and temperature change of the mixture were monitored. At regular intervals, samples were taken out and cooled to room temperature (25 °C). The viscosity and NCO content of the samples were tested. The test results are shown in Table 1.

Table 1. Test Results of Comparative Example 1

| Time (days) | 0 | 7 | 21 | 35 | 49 | 56 |
|---|---|---|---|---|---|---|
| Temperature at the beginning (°C) | 50 | 50 | 50 | 50 | 50 | 50 |
| NCO value | 30.21 | 30.13 | 30.1 | 28.19 | 26.33 | 25.7 |
| Viscosity (mPa.S) | 194 | 225 | 250 | 2200 | 17000 | >100000 |
| Real-time temperature of resin in oven (°C) | 50 | 50 | 50 | 50 | 50 | 50 |

It can be seen from Table 1 that the viscosity of the isocyanate increased significantly after a few weeks and exceeded the normal quality standard. After 5 weeks, the NCO value dropped drastically, and the viscosity became too high to be usable.
Said changes can also be verified from the infrared spectra in Fig. 1. Compared with isocyanate without free radical initiator, isocyanate containing a free radical initiator showed three characteristic peaks (1704.80 $cm^{-1}$, 1409.60 $cm^{-1}$, 758.36 $cm^{-1}$) after 56 days, indicating the presence of isocyanurate groups. It is verified that in the presence of the free radical, trimerization took place to generate isocyanurate groups.
(Note: The curve s1 in Fig. 1 represents the spectrum of a system with only isocyanate 44V20; the curve s2 in Fig. 1 shows that after adding 2 pbw of TBPB into isocyanate 44V20, the viscosity has no change in the initial stage; the curve s3 in Fig. 1 shows the spectrum after 56 days after adding 2 pbw of TBPB into isocyanate 44V20.)

Example 1

100 parts by weight of liquid isocyanate raw material 44V20 and then 2 parts by weight of TBPB and 0.02 part by weight of tert-butyl hydroquinone were added into a plastic cup. The mixture was uniformly stirred quickly, and then placed into an oven at 50 °C. The viscosity change and temperature change of the mixture were monitored. At regular

intervals, samples were taken out and cooled to room temperature (25 °C). The viscosity and NCO content of the samples were tested. The test results are shown in Table 2.

Table 2. Test Results of Example 1

| Time (days) | 0 | 14 | 28 | 42 | 56 |
|---|---|---|---|---|---|
| Temperature at the beginning (°C) | 50 | 50 | 50 | 50 | 50 |
| NCO value | 30.1 | 30.08 | 29.92 | 29.87 | 29.82 |
| Viscosity (mPa.S) | 194 | 224 | 237 | 251 | 265 |
| Real-time temperature of resin in oven (°C) | 50 | 50 | 50 | 50 | 50 |

Comparative Example 2

100 parts by weight of liquid isocyanate raw material 44V20 and then 2 parts by weight of TBPB were added into a plastic cup. The mixture was uniformly stirred quickly, and then placed into an oven at 60 °C. The viscosity change and temperature change of the mixture were monitored. At regular intervals, samples were taken out and cooled to room temperature (25 °C). The viscosity and NCO content of the samples were tested. The test results are shown in Table 3.

Table 3. Test Results of Comparative Example 2

| Time (days) | 0 | 7 | 14 | 21 | 28 |
|---|---|---|---|---|---|
| Temperature at the beginning (°C) | 60 | 60 | 60 | 60 | 60 |
| NCO value | 30.21 | 27.88 | 26.03 | / | / |
| Viscosity (mPa.S) | 194 | 2570 | 52400 | Soft gel-like mass | Relatively hard solid |
| Real-time temperature of resin in oven (°C) | 60 | 60 | 60 | 60 | 60 |

Example 2

100 parts by weight of liquid isocyanate raw material 44V20 and then 2 parts by weight of TBPB and listed parts by weight in Table 4 of BHT were added into a plastic cup. The mixture was uniformly stirred quickly, and then placed into an oven at 60 °C, wherein the oven temperature was kept constant. The viscosity change of the isocyanate mixture was monitored. At regular intervals, samples were taken out and cooled to room temperature (25 °C). The viscosity and NCO content of the samples were tested. The test results are shown in Table 4.

Table 4. Test Results of Example 2

| Amount of added BHT pbw/ parts by weight | Time (days) | 0 | 7 | 14 | 21 | 28 | 35 |
|---|---|---|---|---|---|---|---|
| 0.1 | NCO value | 30.04 | 30.15 | 28.96 | 27.33 | / | / |
| | Viscosity (mPa.S) | 196 | 202 | 553 | 5740 | Soft gel-like mass | Relatively hard solid |
| 0.2 | NCO value | 30.08 | 30.17 | 30.02 | 28.89 | 25.6 | / |
| | Viscosity (mPa.S) | 191 | 200 | 216 | 675 | 68520 | Soft gel-like mass |
| 0.4 | NCO value | 30.05 | 30.13 | 29.91 | 30.06 | 26.72 | 26.22 |
| | Viscosity (mPa.S) | 194 | 204 | 216 | 234 | 14160 | 19960 |

It can be seen from the above Examples 1, 2 and Comparative Examples 1, 2 that adding a small amount of free radical inhibitor into the isocyanate containing a free radical initiator can greatly improve its storage and transportation stability, and can effectively improve the shelf life of products.

Although the preferable examples of the present invention have been disclosed as above, they are not intended

to limit the present invention. Those skilled in the art can make various changes and modifications without departing from the spirit and scope of the present invention. Therefore, the scope of the present invention shall be defined by the scope of the claims.

## Claims

**1.** A method for stably storing an isocyanate composition comprising the following components:

A1) one or more polyisocyanates;
A2) at least one free radical initiator;

wherein component A3) at least one free radical inhibitor is added into the isocyanate composition.

**2.** The method according to claim 1, **characterized in that** the polyisocyanate is selected from aromatic isocyanates, preferably diphenylmethane diisocyanate, toluene diisocyanate, diphenylmethane diisocyanate or combinations thereof, particularly preferably diphenylmethane diisocyanate or polyphenylene polymethylene polyisocyanate.

**3.** The method according to claim 1 or 2, **characterized in that** the content of said A2) free radical initiator is 0.1 to 5 pbw, preferably 0.2 to 4 pbw, more preferably 0.4 to 3 pbw, based on the total weight of the isocyanate composition being 100 pbw.

**4.** The method according to claim 1 or 2, **characterized in that** the content of said A3) free radical inhibitor is 0.001 to 2.0 pbw, preferably 0.002 to 1 pbw, more preferably 0.01 to 0.8 pbw, based on the total weight of the isocyanate composition being 100 pbw.

**5.** The method according to claim 1 or 2, **characterized in that** said A3) free radical inhibitor is selected from phenols, amines and sulfur compounds containing hindered structures and/or conjugated structures, preferably hindered phenols, hindered amines and phenothiazines, more preferably hindered phenols.

**6.** An isocyanate composition comprising the following components:

A1) one or more polyisocyanates;
A2) a free radical initiator; and
A3) at least one free radical inhibitor.

**7.** A method for preparing (poly)isocyanurate by reacting an isocyanate composition comprising the following components:

A1) one or more polyisocyanates;
A2) a free radical initiator; and
A3) at least one free radical inhibitor.

**8.** Use of a free radical inhibitor in inhibiting the isocyanate trimerization catalyzed by a free radical initiator for preparing (poly)isocyanurates.

**9.** The use according to claim 8, **characterized in that** the content of the free radical inhibitor is 0.001 to 2.0 pbw, preferably 0.002 to 1 pbw, more preferably 0.01 to 0.8 pbw, based on the total weight of the isocyanate composition being 100 pbw.

**10.** A method for preparing a polyurethane resin, wherein the polyurethane resin is prepared by reacting a polyurethane reaction system comprising the following components:

component A) comprising:

A1) one or more polyisocyanates;
A2) a free radical initiator;
A3) at least one free radical inhibitor.

component B) comprising:

B1) one or more organic polyols, the content of the organic polyol being 21 to 60 wt.%, based on the total weight of the polyurethane composition being 100 wt.%;
B2) one or more compounds with the structure of formula (I)

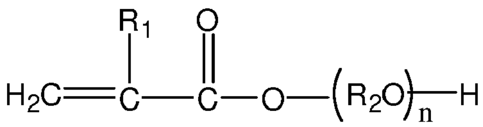

I ,

wherein $R_1$ is selected from hydrogen, methyl or ethyl; $R_2$ is selected from alkylene groups having 2 to 6 carbon atoms, propylene-2,2-di(4-phenylene), 1,4-xylylene, 1,3-xylylene, 1,2-xylylene; n is an integer selected from 1 to 6.

**11.** The method according to claim 10, **characterized in that** said component B2) is selected from hydroxyethyl methacrylate, hydroxypropyl methacrylate, hydroxybutyl methacrylate, hydroxyethyl acrylate, hydroxypropyl acrylate, hydroxybutyl acrylate or combinations thereof.

**12.** The method according to claim 10 or 11, **characterized in that** the organic polyol has a functionality of 1.7 to 6, preferably 1.9 to 4, more preferably 1.9 to 2.8, and a hydroxyl value of 150 to 1100 mg KOH/g (DIN 53240-1 (June 2013)).

**13.** A polyurethane resin prepared by the method for preparing a polyurethane resin according to claims 10 to 12.

**14.** A polyurethane product comprising the polyurethane resin according to claim 13.

**15.** The polyurethane product according to claim 14, **characterized in that** the polyurethane product is selected from cable bridges, frames for door and window curtain walls, ladder frames, tent poles or pipes, anti-glare panels, floors, sucker rods, wire poles and cross arms, guardrails, grilles, construction profiles, container profiles and plates, bicycle frames, fishing rods, cable cores, core rods for insulators, radomes, single-layer or sandwich continuous plates, and shells, webs, spar caps, auxiliary beams and blade roots for turbine blades.

Figure 1

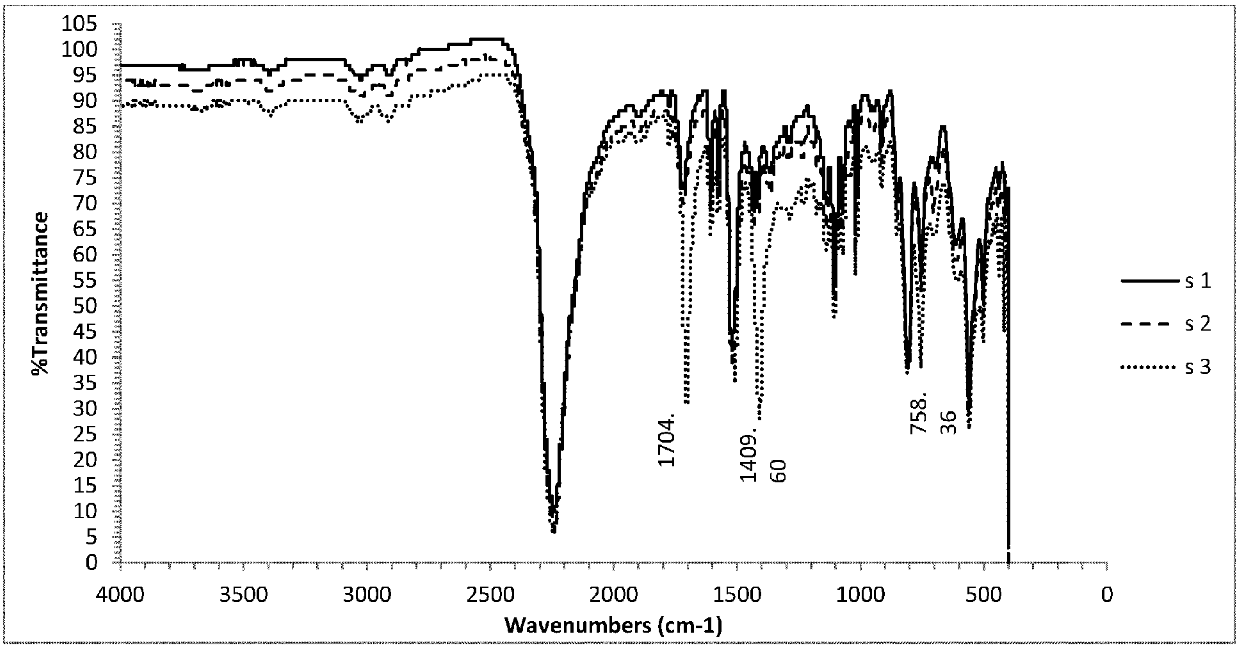
%Transmittance
105
100
95
90
85
80
75
70
65
60
55
50
45
40
35
30
25
20
15
10
5
0
4000
3500
3000
2500
2000
1500
1000
500
0
Wavenumbers (cm-1)
1704.
1409.
60
758.
36
s 1
s 2
s 3

Europäisches Patentamt
European Patent Office
Office européen des brevets

# EUROPEAN SEARCH REPORT

Application Number
EP 20 19 8907

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | DE 23 58 503 A1 (GEN TIRE & RUBBER CO) 30 May 1974 (1974-05-30)<br>* example 1 *<br>----- | 1-9<br>10-15 | INV.<br>C08G18/02<br>C08G18/67<br>C08G18/76<br>C08G18/79 |
| X<br>A | US 10 108 090 B2 (FUJIFILM CORP [JP]) 23 October 2018 (2018-10-23)<br>* claim 1; figure 1; table 1 *<br>----- | 1-6<br>7-15 | |

| TECHNICAL FIELDS SEARCHED (IPC) |
|---|
| C08G |

The present search report has been drawn up for all claims

| Place of search | Date of completion of the search | Examiner |
|---|---|---|
| Munich | 18 March 2021 | Bergmeier, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

## ANNEX TO THE EUROPEAN SEARCH REPORT ON EUROPEAN PATENT APPLICATION NO. EP 20 19 8907

This annex lists the patent family members relating to the patent documents cited in the above-mentioned European search report. The members are as contained in the European Patent Office EDP file on
The European Patent Office is in no way liable for these particulars which are merely given for the purpose of information.

18-03-2021

| Patent document cited in search report | Publication date | Patent family member(s) | Publication date |
|---|---|---|---|
| DE 2358503 A1 | 30-05-1974 | DE 2358503 A1 | 30-05-1974 |
| | | FR 2207943 A1 | 21-06-1974 |
| | | IT 995660 B | 20-11-1975 |
| | | JP S4982761 A | 09-08-1974 |
| US 10108090 B2 | 23-10-2018 | CN 106575078 A | 19-04-2017 |
| | | JP 6309625 B2 | 11-04-2018 |
| | | JP WO2016009894 A1 | 27-04-2017 |
| | | TW 201604648 A | 01-02-2016 |
| | | US 2017115564 A1 | 27-04-2017 |
| | | WO 2016009894 A1 | 21-01-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 101675099 A
- US 5821296 A
- CN 101974307 B


### Non-patent literature cited in the description


- **LIU YIJUN.** Handbook of Polyurethane Raw Materials and Auxiliaries. 01 April 2005
- **LIU HOUJUN.** Polyurethane Elastomer. August 2012